# EUROPEAN PATENT SPECIFICATION

(11) **EP 4 367 911 B1**
(45) Date of publication and mention of the grant of the patent: **11.11.2026**
(21) Application number: 22836731.4
(22) Date of filing: 23.06.2022
(51) Int. Cl.: H04W 8/18, H04L 41/14, H04L 41/5009, H04L 43/08, H04W 4/50, H04W 4/40

(54) **NETWORK NODES AND METHODS THEREIN FOR EVENT MONITORING**
NETZWERKKNOTEN UND VERFAHREN DARIN ZUR EREIGNISÜBERWACHUNG
NOEUDS DE RÉSEAU ET PROCÉDÉS ASSOCIÉS POUR LA SURVEILLANCE D'ÉVÉNEMENTS

(30) Priority: 07.07.2021 WO PCT/CN2021/104874
(43) Date of publication of application: 15.05.2024
(73) Proprietor: Telefonaktiebolaget LM Ericsson (publ), 164 83 Stockholm (SE)
(72) Inventor: ZHANG, Fengpei, Guangzhou, Guangdong 510630 (CN); PRZYBYSZ, Hubert, 126 37 Hägersten (SE); CHEN, Ping, Shanghai 200335 (CN); XU, Wenliang, Shanghai 200335 (CN)
(74) Representative: Ericsson
(86) International application number: PCT/CN2022/100772
(87) International publication number: WO 2023/279977

(56) References cited:
- WO-A1-2021/131902
- WO-A1-2022/075752
- US-A1- 2021 007 178
- SAMSUNG: "SEAL Event Monitoring Service", vol. SA WG6, no. e-meeting; 20210412 - 20210420, 18 April 2021 (2021-04-18), XP051996069, Retrieved from the Internet <URL:https://ftp.3gpp.org/tsg_sa/WG6_MissionCritical/TSGS6_042-bis-e/docs/S6-211068.zip S6-211068_was_210863-Rev1_eSEAL-Event Monitoring.docx> [retrieved on 20210418]
- ERICSSON: "QoS Monitoring support", vol. SA WG6, no. e-meeting; 20210524 - 20210602, 8 June 2021 (2021-06-08), XP052026711, Retrieved from the Internet <URL:https://ftp.3gpp.org/3guInternal/3GPP_Ultimate_CRPacks/SP-210484.zip 23434_CR0063r1_(Rel-17)_S6-211392-was211199-eSEAL QoS Monitoring.doc> [retrieved on 20210608]
- "3rd Generation Partnership Project; Technical Specification Group Services and System Aspects; Service Enabler Architecture Layer for Verticals; Functional architecture and information flows; (Release 16)", 30 May 2019 (2019-05-30), XP051749115, Retrieved from the Internet <URL:http://www.3gpp.org/ftp/Meetings%5F3GPP%5FSYNC/SA/Docs/SP%2D190473%2Ezip> [retrieved on 20190530]
- ERICSSON: "QoS Monitoring support", 3GPP DRAFT; S6-211392, vol. SA WG6, 31 May 2021 (2021-05-31), pages 1 - 9, XP052023897
- ERICSSON: "Improved Event Monitoring Service", 3GPP DRAFT; S6-211840, vol. SA WG6, 20 July 2021 (2021-07-20), pages 1 - 5, XP052031818

## Description

### TECHNICAL FIELD

The present disclosure relates to communication technology, and more particularly, to network nodes and methods therein for event monitoring.

### BACKGROUND

Since the 3^{rd} Generation Partnership Project (3GPP) Release 16, Service Enablement Architecture Layer for Verticals (SEAL) has been introduced to support vertical applications (e.g., Vehicle to Everything (V2X) applications). 3GPP Technical Specification (TS) 23.434, V17.2.0, specifies application plane and signaling plane entities for application-enabling services (e.g., group management, configuration management, location management, identity/key management, network resource management, etc.) that can be reused across vertical applications. The SEAL also specifies northbound Application Programing Interfaces (APIs) for its individual services to enable flexible integration with vertical applications.

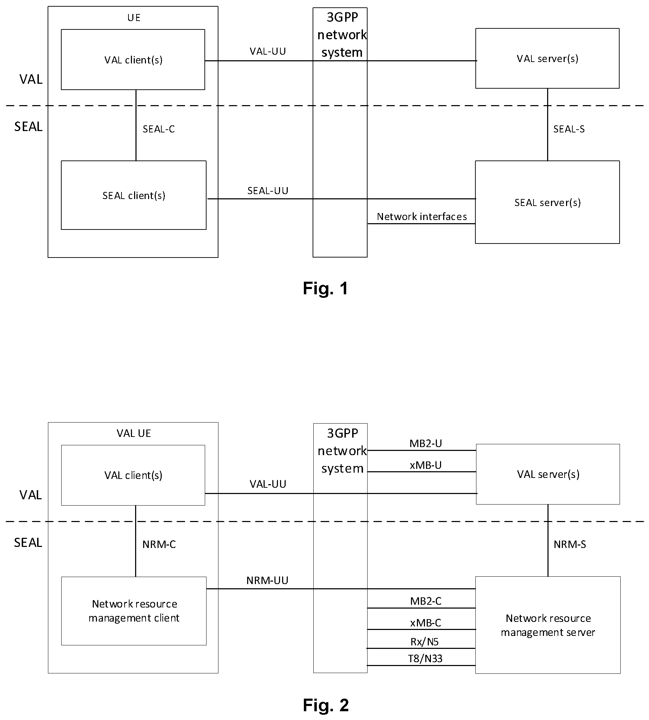

Fig. 1 illustrates a generic on-network functional model of SEAL. As shown, in a Vertical Application Layer (VAL), a VAL client communicates with a VAL server over a VAL-UU reference point. The VAL-UU reference point supports both unicast and multicast delivery modes. SEAL functional entities on a User Equipment (UE) and a server are grouped into SEAL client(s) and SEAL server(s) respectively. The SEAL consists of a common set of services (e.g., group management, location management, etc.) and reference points. The SEAL offers its services to the VAL. The SEAL client(s) communicates with the SEAL server(s) over a SEAL-UU reference point. The SEAL-UU reference point supports both unicast and multicast delivery modes. The SEAL client(s) provides service enabler layer support functions to VAL client(s) over a SEAL-C reference point. The VAL server(s) communicates with the SEAL server(s) over a SEAL-S reference point. The SEAL server(s) may communicate with the underlying 3GPP network systems using respective 3GPP interfaces specified by the 3GPP network system.

One of the capabilities the SEAL provides is Network Resource Management (NRM). The NRM is a SEAL service that offers network resource management (e.g., unicast and multicast network resources) related capabilities to one or more vertical applications. Fig. 2 illustrates an on-network functional model of SEAL for NRM. As shown, an NRM client communicates with an NRM server over a NRM-UU reference point. The NRM client provides support for NRM functions to the VAL client(s) over an NRM-C reference point. The VAL server(s) communicate with the NRM server over an NRM-S reference point. The NRM server communicates with a Broadcast Multicast Service Center (BM-SC) via MB2-C and xMB-C reference points to obtain and control multicast resources from the underlying 3GPP network system. The NRM server communicates with a Policy and Charging Rules Function (PCRF) via an Rx reference point and/or communicates with a Policy Control Function (PCF) via an N5 reference point to control unicast resources from the underlying 3GPP network system.

The 3GPP network provides event monitoring functions to Application Functions (AFs) in several network functions, including:
- Network Exposure Function (NEF): The Event Exposure API specified in the 3GPP TS 29.522, V17.2.0 and TS 29.122, V17.2.0 provides capabilities such as UE reachability, Packet Data Network (PDN) connectivity status, and loss of connectivity, etc.
- Network Data Analytics Function (NWDAF): The Analytics Exposure API specified in TS 29.522, V17.2.0 and TS 29.520, V17.3.0 provides capabilities such as UE mobility, network congestion, and Quality of Service (QoS) sustainability, etc.

In Fig. 2, the NRM server communicates with the NEF via T8/N33 reference points to enable event monitoring functions in an NRM service of SEAL.

However, it is desired that the event monitoring functions in SEAL can provide enhanced functionality instead of simply re-exposing 3GPP core network services, otherwise the VAL server can directly invoke the 3GPP core network services without additional delay due to additional message hops in the NRM service.

3GPP Draft Document "SEAL Event Monitoring Service" (S6-211068, XP051996069) discloses an arrangement in which a Vertical Application Layer (VAL) server utilizes a NRM server for monitoring events related to its VAL UEs and receives the event reports. The NRM server may subscribe to multiple core network services to fetch all the required events related to the multiple VAL UEs served by the VAL server and report the same to the VAL server with the event details.

### SUMMARY

The present invention is defined by the independent claims, to which reference should now be made. Specific embodiments are defined in the dependent claims.

### BRIEF DESCRIPTION OF THE DRAWINGS

The above and other objects, features and advantages will be more apparent from the following description of embodiments with reference to the figures, in which:
- Fig. 1: is a schematic diagram showing a generic on-network functional model of SEAL;
- Fig. 2: is a schematic diagram showing an on-network functional model of SEAL for NRM;
- Fig. 3: is a flowchart illustrating a method in a VAL server according to an embodiment of the present disclosure;
- Fig. 4: is a flowchart illustrating a method in an NRM server according to another embodiment of the present disclosure;
- Fig. 5: is a sequence diagram showing an exemplary monitoring events subscription procedure according to an embodiment of the present disclosure;
- Fig. 6: is a sequence diagram showing an exemplary monitoring events notification procedure according to another embodiment of the present disclosure;
- Fig. 7: is a block diagram of a network node according to an embodiment of the present disclosure;
- Fig. 8: is a block diagram of a network node according to another embodiment of the present disclosure; and
- Fig. 9: is a block diagram of a network node according to yet another embodiment of the present disclosure.

### DETAILED DESCRIPTION

In the present disclosure, a network function, or NF, can be implemented either as a network element on a dedicated hardware, as a software instance running on a dedicated hardware, or as a virtualized function instantiated on an appropriate platform, e.g. on a cloud infrastructure.

The term "terminal device" or "UE" refers to any end device that can access a wireless communication network and receive services therefrom. By way of example and not limitation, the terminal device refers to a mobile terminal, user equipment (UE), or other suitable devices. The UE may be, for example, a Subscriber Station (SS), a Portable Subscriber Station, a Mobile Station (MS), or an Access Terminal (AT). The terminal device may include, but not limited to, portable computers, desktop computers, image capture terminal devices such as digital cameras, gaming terminal devices, music storage and playback appliances, a mobile phone, a cellular phone, a smart phone, voice over IP (VoIP) phones, wireless local loop phones, tablets, personal digital assistants (PDAs), wearable terminal devices, vehicle-mounted wireless terminal devices, wireless endpoints, mobile stations, laptop-embedded equipment (LEE), laptop-mounted equipment (LME), USB dongles, smart devices, wireless customer-premises equipment (CPE) and the like. In the following description, the terms "terminal device", "terminal", "user equipment" and "UE" may be used interchangeably. As one example, a terminal device may represent a UE configured for communication in accordance with one or more communication standards promulgated by the 3rd Generation Partnership Project (3GPP), such as 3GPP's Global System for Mobile Communications (GSM), Universal Mobile Telecommunications System (UMTS), Long Term Evolution (LTE), and/or other suitable 1G (the first generation), 2G (the second generation), 2.5G, 2.75G, 3G (the third generation), 4G (the fourth generation), 4.5G, or 5G (the fifth generation). As used herein, a "user equipment" or "UE" may not necessarily have a "user" in the sense of a human user who owns and/or operates the relevant device. In some embodiments, a terminal device may be configured to transmit and/or receive information without direct human interaction. For instance, a terminal device may be designed to transmit information to a network on a predetermined schedule, when triggered by an internal or external event, or in response to requests from the wireless communication network. Instead, a UE may represent a device that is intended for sale to, or operation by, a human user but that may not initially be associated with a specific human user.

The terminal device may support device-to-device (D2D) communication, for example by implementing a 3GPP standard for sidelink communication, and may in this case be referred to as a D2D communication device.

As yet another example, in an Internet of Things (IOT) scenario, a terminal device may represent a machine or other device that performs monitoring and/or measurements, and transmits the results of such monitoring and/or measurements to another terminal device and/or network equipment. The terminal device may in this case be a machine-to-machine (M2M) device, which may in a 3GPP context be referred to as a machine-type communication (MTC) device. As one particular example, the terminal device may be a UE implementing the 3GPP narrow band internet of things (NB-IoT) standard. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment.

Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms. The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

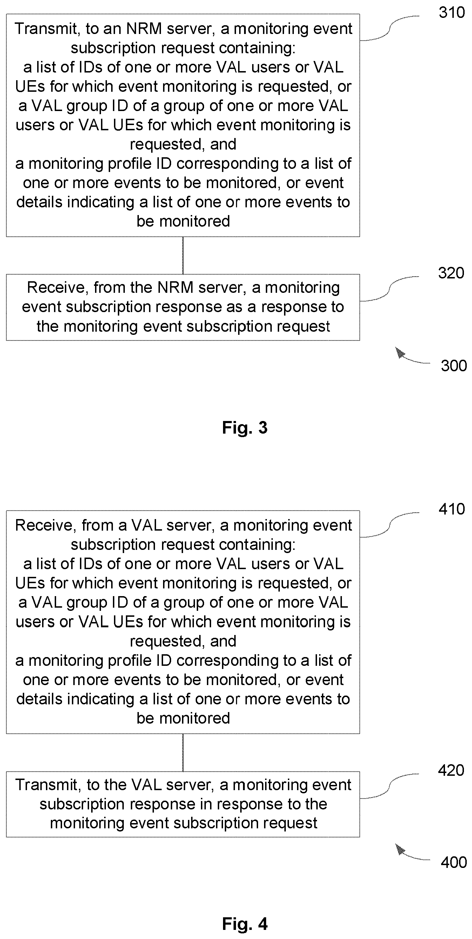

Fig. 3 is a flowchart illustrating a method 300 according to an embodiment of the present disclosure. The method 300 can be performed at a VAL server.

At block 310, a monitoring event subscription request is transmitted to an NRM server. The monitoring event subscription request contains: i) a list of IDs of one or more VAL users or VAL UEs for which event monitoring is requested, or a VAL group ID of a group of one or more VAL users or VAL UEs for which event monitoring is requested, and ii) a monitoring profile ID corresponding to a list of one or more events to be monitored, or event details indicating a list of one or more events to be monitored.

Here, each of the one or more events to be monitored may be a monitoring event or an analytics event.

At block 320, a monitoring event subscription response is received, from the NRM server, as a response to the monitoring event subscription request.

In an example, when the monitoring event subscription request contains the event details, the monitoring event subscription response may contain a monitoring profile ID corresponding to the list of the one or more events to be monitored.

In an example, the monitoring event subscription request may further contain a VAL service ID identifying a VAL service, such as V2X platooning or IoT mobility, associated with the event monitoring.

In an example, the monitoring event subscription request may further contain one or more validity conditions for at least one of the one or more events to be monitored. Here, the one or more validity conditions may be one or more temporal and/or spatial conditions for the at least one event to be valid. For example, an example of the validity condition may be that an event is valid only from 9:00am to 10:00am every Tuesday and/or only in Tracking Areas TA1 and TA2.

In particular, the monitoring event subscription request may be Monitoring Events Subscription Request as defined in TS 23.434, which can be changed as shown in Table 1 below:

**Table 1 - Monitoring Events Subscription Request**

| **Information element** | **Status** | **Description** |
|---|---|---|
| Identities list | O (NOTE 1) | List of VAL users or VAL UEs whose events monitoring is requested. |
| VAL group ID | O (NOTE 1) | VAL group ID of the VAL UE group. |
| VAL service ID | ○ | VAL service ID. |
| Monitoring profile ID | O (NOTE 2) | The monitoring profile ID, which identifies a list of monitoring and/or analytics events. |
| Validity conditions | ○ | The temporal and/or spatial conditions applied for the events to be considered as valid. |
| Event Details | O (NOTE 2) | List of monitoring and/or analytics events that the VAL server is interested in |
| NOTE 1: For identifying the target UE(s), either a list of VAL users/UEs or a group of VAL UEs shall be provided. | | |
| NOTE 2: Either Event Details or Monitoring profile ID shall be present. | | |

Moreover, the monitoring event subscription response may be Monitoring Events Subscription Response as defined in TS 23.434, which can be changed as shown in Table 2 below:

**Table 2 - Monitoring Events Subscription Response**

| **Information element** | **Status** | **Description** |
|---|---|---|
| Subscription status | M | It indicates the subscription result |
| Monitoring profile ID | ○ | It indicates the monitoring profile identifier. It is present when Event Details are provided in the Monitoring Events Subscription request. |

In an example, the VAL server may receive, from the NRM server, a notification of at least one of the one or more events to be monitored. For example, the notification may be carried in a Monitoring Events Notification message defined in TS 23.434, which is shown in Table 3 below:

**Table 3 - Monitoring Events Notification**

| **Information element** | **Status** | **Description** |
|---|---|---|
| EventDetails | | List of events related to VAL UE(s). |
| > identity | M | VAL UE for which the events are related to. |
| > events | M | List of Monitoring and Analytics events related to the VAL UE. |
| Timestamp | ○ | The timestamp for the monitoring and analytics events |

Fig. 4 is a flowchart illustrating a method 400 according to an embodiment of the present disclosure. The method 400 can be performed at an NRM server.

At block 410, a monitoring event subscription request is received from a VAL server. The monitoring event subscription request contains: i) a list of IDs of one or more VAL users or VAL UEs for which event monitoring is requested, or a VAL group ID of a group of one or more VAL users or VAL UEs for which event monitoring is requested, and ii) a monitoring profile ID corresponding to a list of one or more events to be monitored, or event details indicating a list of one or more events to be monitored.

Here, each of the one or more events to be monitored may be a monitoring event or an analytics event.

The monitoring event subscription request may be Monitoring Events Subscription Request as shown in Table 1 above.

At block 420, a monitoring event subscription response is transmitted to the VAL server in response to the monitoring event subscription request.

The monitoring event subscription response may be Monitoring Events Subscription Response as shown in Table 2 above.

In an example, the NRM server can then transmit, to a core network node (e.g., an NEF in a 5G Core (5GC)), a request for subscription to at least one of the one or more events to be monitored for the one or more VAL users or VAL UEs, e.g., according to 3GPP TS 23.502, V17.1.0 for UE monitoring events or according to V17.1.0 for UE analytics events. Upon receiving, from the core network node, a notification of the at least one event, the NRM server can notify the VAL server about the at least one event, e.g., via a Monitoring Events Notification message shown in Table 3 above.

In an example, when the monitoring event subscription request contains the event details, the NRM server can determine a monitoring profile ID corresponding to the list of the one or more events to be monitored based on a correspondence or mapping between monitoring profile IDs and event details. In this case, the monitoring event subscription response may contain the determined monitoring profile ID.

In an embodiment, when the monitoring event subscription request contains the monitoring profile ID, the NRM server can determine event details indicating the list of the one or more events to be monitored based on a correspondence or mapping between monitoring profile IDs and event details.

For example, the correspondence or mapping may be preconfigured by an O&M entity, or may be dynamically created and/or updated based on one or more previous monitoring event subscription requests with event details.

In an example, the monitoring event subscription request may further contain a VAL service ID identifying a VAL service, such as V2X platooning or IoT mobility, associated with the event monitoring. The NRM server can determine event specific information for the VAL service based on the VAL service ID, e.g., based on a correspondence or mapping between VAL service IDs and event specific information. Here, the correspondence or mapping may be preconfigured by an O&M entity. For example, the event specific information may be a QoS requirement for the at least one event (e.g., QoS requirement for an analytics event). In an example, the determined event specific information may complement or override event specific information in the event details (either the event details in the monitoring event subscription request or the event details determined based on the monitoring profile ID in the monitoring event subscription request). The event specific information may be included in the request for subscription transmitted to the core network node.

In an example, the monitoring event subscription request may further contain one or more validity conditions for at least one of the one or more events to be monitored. Here, the one or more validity conditions may be one or more temporal and/or spatial conditions for the at least one event to be valid. For example, an example of the validity condition may be that an event is valid only from 9:00am to 10:00am every Tuesday and/or only in Tracking Areas TA1 and TA2.

In an example, the one or more validity conditions may be included in the request for subscription transmitted to the core network node, such that the core network node can transmit the notification to the NRM server only when the at least one event is valid in accordance with the one or more validity conditions. Alternatively, upon receiving notification of the at least one event from the core network node, the NRM server can determine whether the at least one event is valid in accordance with the one or more validity conditions, and notify the VAL server only when the at least one event is valid in accordance with the one or more validity conditions.

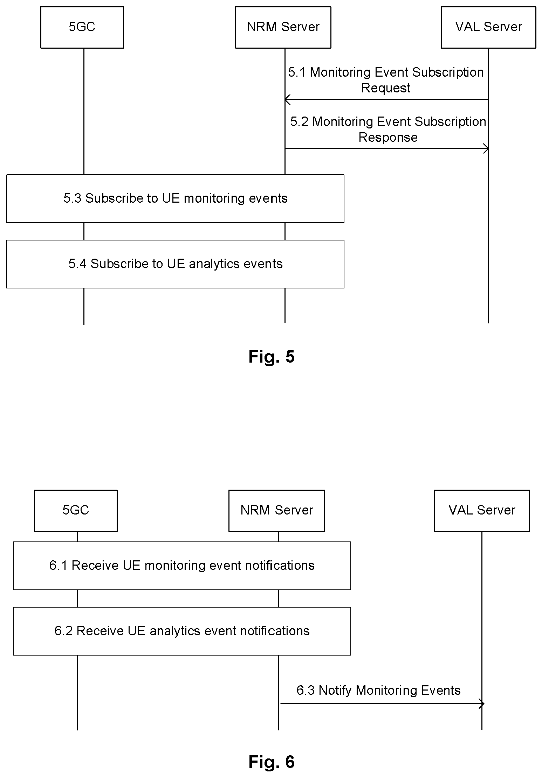

The above methods 300 and 400 will be further explained with reference to Figs. 5 and 6.

Fig. 5 is a sequence diagram showing an exemplary monitoring events subscription procedure according to an embodiment of the present disclosure. It is assumed here that the NRM server is authorized to consume the core network services (Monitoring events as specified in 3GPP TS 23.502 and Analytics services as specified in 3GPP TS 23.288).

At 5.1, the VAL server sends a Monitoring Events Subscription request to the NRM server, requesting the NRM server to monitor the events related to the VAL UE(s) as per the subscription request, and shall include the information related to the events that the VAL server is interested in. The VAL server shall include either event details or a Monitoring profile ID for identifying the monitoring and/or analytics events. The VAL server may include VAL service ID, temporal and/or spatial validity conditions applied for the monitoring events.

At 5.2, the NRM server shall check if the VAL server is authorized to initiate the Monitoring Events Subscription request and if authorized, shall respond with a Monitoring Events Subscription Response message, indicating the successful subscription status along with subscription information to the VAL server. If event details are not received, the NRM server derives the event details from the Monitoring profile ID based on a local configuration then uses the derived information to consume the relevant core network services; otherwise, the NRM server uses the received event details to consume the relevant core network services and generates a Monitoring profile ID which is included in the Monitoring Event Subscription response. The VAL service ID may be used by the NRM server to derive event specific information in 3GPP core network services (e.g., a QoS requirement in analytics event subscription).

Here, the mapping between Monitoring profile IDs and event details in the NRM server can be pre-configured by O&M and/or dynamically built based on VAL server request with explicitly sent event details.

At 5.3, based on the events of interest information in the subscription request message, if applicable, the NRM server shall subscribe to the UE monitoring events (like, LOSS_OF_CONNECTIVITY, COMMUNICATION_FAILURE etc.) for the set of UEs (VAL UEs) in the subscription request, as specified in 3GPP TS 23.502.

At 5.4, based on the events of interest information in the subscription request message, if applicable, the NRM server shall subscribe to the UE analytics events (like ABNORMAL_BEHAVIOUR etc.) for the set of UEs (VAL UEs) in the subscription request, as specified in 3GPP TS 23.288.

Fig. 6 is a sequence diagram showing an exemplary monitoring events notification procedure according to another embodiment of the present disclosure. It is assumed here that the VAL server has subscribed with the NRM server using the monitoring events subscription procedure as described in Fig. 5.

At 6.1, The NRM server receives the VAL UE related monitoring event notifications from the 3GPP core network as specified in 3GPP TS 23.502.

Alternatively, at 6.2, the NRM server receives the VAL UE related analytics event notifications from the 3GPP core network as specified in 3GPP TS 23.288.

At 6.3, the NRM server notifies the VAL server about the events related to the VAL UE in a Notify Monitoring Events message. If multiple events are to be notified, then the NRM server may aggregate the notifications and send to the VAL server.

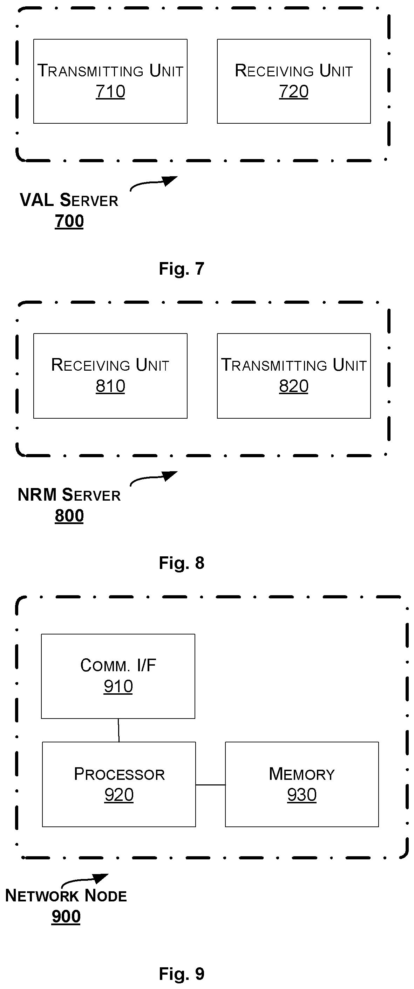

Correspondingly to the method 300 as described above, a VAL server is provided. Fig. 7 is a block diagram of a VAL server 700 according to an embodiment of the present disclosure.

The VAL server 700 is operative to perform the method 300 as described above in connection with Fig. 3. The VAL server 700 includes a transmitting unit 710 configured to transmit, to an NRM server, a monitoring event subscription request. The monitoring event subscription request contains: a list of IDs of one or more VAL users or VAL UEs for which event monitoring is requested, or a VAL group ID of a group of one or more VAL users or VAL UEs for which event monitoring is requested, and a monitoring profile ID corresponding to a list of one or more events to be monitored, or event details indicating a list of one or more events to be monitored. The VAL server 700 further includes a receiving unit 720 configured to receive, from the NRM server, a monitoring event subscription response as a response to the monitoring event subscription request.

In an embodiment, when the monitoring event subscription request contains the event details, the monitoring event subscription response may contain a monitoring profile ID corresponding to the list of the one or more events to be monitored.

In an embodiment, the monitoring event subscription request may further contain a VAL service ID identifying a VAL service associated with the event monitoring.

In an embodiment, the monitoring event subscription request may further contain one or more validity conditions for at least one of the one or more events to be monitored.

In an embodiment, the one or more validity conditions may include one or more temporal and/or spatial conditions for the at least one event to be valid.

In an embodiment, each of the one or more events to be monitored may include a monitoring event or an analytics event.

In an embodiment, the receiving unit 720 may be further configured to receive, from the NRM server, a notification of at least one of the one or more events to be monitored.

The units 710 and 720 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 3.

Correspondingly to the method 400 as described above, an NRM server is provided. Fig. 8 is a block diagram of an NRM server 800 according to an embodiment of the present disclosure.

The NRM server 800 is operative to perform the method 400 as described above in connection with Fig. 4. The NRM server 800 includes a receiving unit 810 configured to receive, from a VAL server, a monitoring event subscription request.

The monitoring event subscription request contains: a list of IDs of one or more VAL users or VAL UEs for which event monitoring is requested, or a VAL group ID of a group of one or more VAL users or VAL UEs for which event monitoring is requested, and an monitoring profile ID corresponding to a list of one or more events to be monitored, or event details indicating a list of one or more events to be monitored. The NRM server 800 further includes a transmitting unit 820 configured to transmit, to the VAL server, a monitoring event subscription response in response to the monitoring event subscription request.

In an embodiment, the NRM server 800 may further include a determining unit configured to, when the monitoring event subscription request contains the event details: determine a monitoring profile ID corresponding to the list of the one or more events to be monitored based on a correspondence or mapping between monitoring profile IDs and event details. The monitoring event subscription response may contain the determined monitoring profile ID.

In an embodiment, the NRM server 800 may further include a determining unit configured to, when the monitoring event subscription request contains the monitoring profile ID: determine event details indicating the list of the one or more events to be monitored based on a correspondence or mapping between monitoring profile IDs and event details.

In an embodiment, the correspondence or mapping may be preconfigured by an O&M entity, or may be created based on one or more previous monitoring event subscription requests with event details.

In an embodiment, each of the one or more events to be monitored may include a monitoring event or an analytics event.

In an embodiment, the transmitting unit 820 may be further configured to transmit, to a core network node, a request for subscription to at least one of the one or more events to be monitored for the one or more VAL users or VAL UEs. The receiving unit 810 may be further configured to receive, from the core network node, a notification of the at least one event. The transmitting unit 820 may be further configured to notify the VAL server about the at least one event.

In an embodiment, the monitoring event subscription request may further contain a VAL service ID identifying a VAL service associated with at least one of the one or more events to be monitored.

In an embodiment, the NRM server 800 may further include a determining unit configured to determine event specific information for the VAL service based on the VAL service ID.

In an embodiment, the event specific information may be determined based on a correspondence or mapping between VAL service IDs and event specific information, the correspondence or mapping being preconfigured by an O&M entity.

In an embodiment, the determined event specific information may complement event specific information in the event details.

In an embodiment, the event specific information may include a QoS requirement for the at least one event.

In an embodiment, the transmitting unit 820 may be further configured to transmit, to a core network node, a request for subscription to the at least one event for the one or more VAL users or VAL UEs, the request containing the event specific information. The receiving unit 810 may be further configured to receive, from the core network node, a notification of the at least one event. The transmitting unit 820 may be further configured to notify the VAL server about the at least one event.

In an embodiment, the monitoring event subscription request may further contain one or more validity conditions for at least one of the one or more events to be monitored.

In an embodiment, the one or more validity conditions may include one or more temporal and/or spatial conditions for the at least one event to be valid.

In an embodiment, the transmitting unit 820 may be further configured to transmit, to a core network node, a request for subscription to the at least one event for the one or more VAL users or VAL UEs, the request containing the one or more validity conditions. The receiving unit 810 may be further configured to receive, from the core network node, a notification of the at least one event. The transmitting unit 820 may be further configured to notify the VAL server about the at least one event.

In an embodiment, the transmitting unit 820 may be further configured to transmit, to a core network node, a request for subscription to the at least one event. The receiving unit 810 may be further configured to receive, from the core network node, a notification of the at least one event. The transmitting unit 820 may be further configured to notify the VAL server about the at least one event only when the at least one event is valid in accordance with the one or more validity conditions.

The units 810 and 820 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 4.

Fig. 9 is a block diagram of a network node 900 according to another embodiment of the present disclosure.

The network node 900 includes a communication interface 910, a processor 920 and a memory 930.

The memory 930 may contain instructions executable by the processor 920 whereby the network node 900 is operative to, when implementing a VAL server, perform the actions, e.g., of the procedure described earlier in conjunction with Fig. 3. Particularly, the memory 930 may contain instructions executable by the processor 920 whereby the network node 900 is operative to, when implementing the VAL server: transmit, to an NRM server, a monitoring event subscription request. The monitoring event subscription request contains: a list of IDs of one or more VAL users or VAL UEs for which event monitoring is requested, or a VAL group ID of a group of one or more VAL users or VAL UEs for which event monitoring is requested, and a monitoring profile ID corresponding to a list of one or more events to be monitored, or event details indicating a list of one or more events to be monitored. The memory 930 may further contain instructions executable by the processor 920 whereby the network node 900 is operative to, when implementing the VAL server: receive, from the NRM server, a monitoring event subscription response as a response to the monitoring event subscription request.

In an embodiment, when the monitoring event subscription request contains the event details, the monitoring event subscription response may contain a monitoring profile ID corresponding to the list of the one or more events to be monitored.

In an embodiment, the monitoring event subscription request may further contain a VAL service ID identifying a VAL service associated with the event monitoring.

In an embodiment, the monitoring event subscription request may further contain one or more validity conditions for at least one of the one or more events to be monitored.

In an embodiment, the one or more validity conditions may include one or more temporal and/or spatial conditions for the at least one event to be valid.

In an embodiment, each of the one or more events to be monitored may include a monitoring event or an analytics event.

In an embodiment, the memory 930 may further contain instructions executable by the processor 920 whereby the network node 900 is operative to, when implementing the VAL server: receive, from the NRM server, a notification of at least one of the one or more events to be monitored.

Alternatively, the memory 930 may contain instructions executable by the processor 920 whereby the network node 900 is operative to, when implementing an NRM server, perform the actions, e.g., of the procedure described earlier in conjunction with Fig. 4. Particularly, the memory 930 may contain instructions executable by the processor 920 whereby the network node 900 is operative to, when implementing the NRM server: receive, from a VAL server, a monitoring event subscription request. The monitoring event subscription request contains: a list of IDs of one or more VAL users or VAL UEs for which event monitoring is requested, or a VAL group ID of a group of one or more VAL users or VAL UEs for which event monitoring is requested, and an monitoring profile ID corresponding to a list of one or more events to be monitored, or event details indicating a list of one or more events to be monitored. The memory 930 may further contain instructions executable by the processor 920 whereby the network node 900 is operative to, when implementing the NRM server: transmitting, to the VAL server, a monitoring event subscription response in response to the monitoring event subscription request.

In an embodiment, the memory 930 may further contain instructions executable by the processor 920 whereby the network node 900 is operative to, when implementing the NRM server: when the monitoring event subscription request contains the event details, determine a monitoring profile ID corresponding to the list of the one or more events to be monitored based on a correspondence or mapping between monitoring profile IDs and event details. The monitoring event subscription response may contain the determined monitoring profile ID.

In an embodiment, the memory 930 may further contain instructions executable by the processor 920 whereby the network node 900 is operative to, when implementing the NRM server: when the monitoring event subscription request contains the monitoring profile ID, determining event details indicating the list of the one or more events to be monitored based on a correspondence or mapping between monitoring profile IDs and event details.

In an embodiment, the correspondence or mapping may be preconfigured by an O&M entity, or may be created based on one or more previous monitoring event subscription requests with event details.

In an embodiment, each of the one or more events to be monitored may include a monitoring event or an analytics event.

In an embodiment, the memory 930 may further contain instructions executable by the processor 920 whereby the network node 900 is operative to, when implementing the NRM server: transmit, to a core network node, a request for subscription to at least one of the one or more events to be monitored for the one or more VAL users or VAL UEs; receive, from the core network node, a notification of the at least one event; and notify the VAL server about the at least one event.

In an embodiment, the monitoring event subscription request may further contain a VAL service ID identifying a VAL service associated with at least one of the one or more events to be monitored.

In an embodiment, the memory 930 may further contain instructions executable by the processor 920 whereby the network node 900 is operative to, when implementing the NRM server: determine event specific information for the VAL service based on the VAL service ID.

In an embodiment, the event specific information may be determined based on a correspondence or mapping between VAL service IDs and event specific information, the correspondence or mapping being preconfigured by an O&M entity.

In an embodiment, the determined event specific information may complement event specific information in the event details.

In an embodiment, the event specific information may include a QoS requirement for the at least one event.

In an embodiment, the memory 930 may further contain instructions executable by the processor 920 whereby the network node 900 is operative to, when implementing the NRM server: transmit, to a core network node, a request for subscription to the at least one event for the one or more VAL users or VAL UEs, the request containing the event specific information; receive, from the core network node, a notification of the at least one event; and notify the VAL server about the at least one event.

In an embodiment, the monitoring event subscription request may further contain one or more validity conditions for at least one of the one or more events to be monitored.

In an embodiment, the one or more validity conditions may include one or more temporal and/or spatial conditions for the at least one event to be valid.

In an embodiment, the memory 930 may further contain instructions executable by the processor 920 whereby the network node 900 is operative to, when implementing the NRM server: transmit, to a core network node, a request for subscription to the at least one event for the one or more VAL users or VAL UEs, the request containing the one or more validity conditions; receive, from the core network node, a notification of the at least one event; and notify the VAL server about the at least one event.

In an embodiment, the memory 930 may further contain instructions executable by the processor 920 whereby the network node 900 is operative to, when implementing the NRM server: transmit, to a core network node, a request for subscription to the at least one event; receive, from the core network node, a notification of the at least one event; and notify the VAL server about the at least one event only when the at least one event is valid in accordance with the one or more validity conditions.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by the processor 920 causes the network node 900 to perform, when implementing a VAL server, the actions, e.g., of the procedure described earlier in conjunction with Fig. 3, or perform, when implementing an NRM server, the actions, e.g., of the procedure described earlier in conjunction with Fig. 4.

The computer program product may be configured as a computer program code structured in computer program modules. The computer program modules could essentially perform the actions of the flow illustrated in Fig. 3 or 4.

The processor may be a single CPU (Central Processing Unit), but could also comprise two or more processing units. For example, the processor may include general purpose microprocessors; instruction set processors and/or related chips sets and/or special purpose microprocessors such as Application Specific Integrated Circuits (ASICs). The processor may also comprise board memory for caching purposes. The computer program may be carried by a computer program product connected to the processor. The computer program product may comprise a non-transitory computer readable storage medium on which the computer program is stored. For example, the computer program product may be a flash memory, a Random Access Memory (RAM), a Read-Only Memory (ROM), or an EEPROM, and the computer program modules described above could in alternative embodiments be distributed on different computer program products in the form of memories.

The disclosure has been described above with reference to embodiments thereof. It should be understood that various modifications, alternations and additions can be made by those skilled in the art without departing from the spirits and scope of the disclosure. Therefore, the scope of the disclosure is not limited to the above particular embodiments but only defined by the claims as attached.

## Claims

1. A method (300) in a Vertical Application Layer, VAL, server, comprising:
transmitting (310), to a Network Resource Management, NRM, server, a monitoring event subscription request containing:
a list of identities, IDs, of one or more VAL users or VAL User Equipments, UEs, for which event monitoring is requested, or a VAL group ID of a group of one or more VAL users or VAL UEs for which event monitoring is requested,
a monitoring profile ID corresponding to a list of one or more events to be monitored, or event details indicating a list of one or more events to be monitored,
a VAL service ID identifying a VAL service associated with at least one of the one or more events to be monitored, and
one or more validity conditions for at least one of the one or more events to be monitored, wherein the one or more validity conditions comprise one or more temporal and/or spatial conditions for the at least one event to be valid; and
receiving (320), from the NRM server, a monitoring event subscription response as a response to the monitoring event subscription request,
wherein when the monitoring event subscription request contains the event details, the monitoring event subscription response contains a monitoring profile ID corresponding to the list of the one or more events to be monitored.

2. The method (300) of claim 1, wherein each of the one or more events to be monitored comprises a monitoring event or an analytics event.

3. The method (300) of any of claims 1 or 2, further comprising:
receiving, from the NRM server, a notification of at least one of the one or more events to be monitored.

4. A method (400) in a Network Resource Management, NRM, server, comprising:
receiving (410), from a Vertical Application Layer, VAL, server, a monitoring event subscription request containing:
a list of identities, IDs, of one or more VAL users or VAL User Equipments, UEs, for which event monitoring is requested, or a VAL group ID of a group of one or more VAL users or VAL UEs for which event monitoring is requested,
a monitoring profile ID corresponding to a list of one or more events to be monitored, or event details indicating a list of one or more events to be monitored,
a VAL service ID identifying a VAL service associated with at least one of the one or more events to be monitored, and
one or more validity conditions for at least one of the one or more events to be monitored, wherein the one or more validity conditions comprise one or more temporal and/or spatial conditions for the at least one event to be valid; and
transmitting (420), to the VAL server, a monitoring event subscription response in response to the monitoring event subscription request,
wherein when the monitoring event subscription request contains the event details, the method (400) further comprises determining a monitoring profile ID corresponding to the list of the one or more events to be monitored based on a correspondence between monitoring profile IDs and event details, and the monitoring event subscription response contains the monitoring profile ID.

5. The method (400) of claim 4, further comprising, when the monitoring event subscription request contains the event details:
determining a monitoring profile ID corresponding to the list of the one or more events to be monitored based on a correspondence or mapping between monitoring profile IDs and event details,
wherein the monitoring event subscription response contains the determined monitoring profile ID; or
the method further comprising, when the monitoring event subscription request contains the monitoring profile ID:
determining event details indicating the list of the one or more events to be monitored based on a correspondence or mapping between monitoring profile IDs and event details.

6. The method (400) of claim 5, wherein the correspondence or mapping is preconfigured by an Operation and Maintenance, O&M, entity, or is created based on one or more previous monitoring event subscription requests with event details.

7. The method (400) of any of claims 4-6, wherein each of the one or more events to be monitored comprises a monitoring event or an analytics event.

8. The method (400) of any of claims 4-7, further comprising:
transmitting, to a core network node, a request for subscription to at least one of the one or more events to be monitored for the one or more VAL users or VAL UEs;
receiving, from the core network node, a notification of the at least one event;
and
notifying the VAL server about the at least one event.

9. The method (400) of any of claims 4-7, further comprising:
determining event specific information for the VAL service based on the VAL service ID.

10. The method (400) of claim 9, wherein the event specific information is determined based on a correspondence or mapping between VAL service IDs and event specific information, the correspondence or mapping being preconfigured by an O&M entity;
and/ or, wherein the event specific information comprises a Quality of Service, QoS, requirement for the at least one event.

11. The method (400) of any of claims 9-10, further comprising:
transmitting, to a core network node, a request for subscription to the at least one event for the one or more VAL users or VAL UEs, the request containing the event specific information;
receiving, from the core network node, a notification of the at least one event;
and
notifying the VAL server about the at least one event.

12. The method (400) of any of claims 4-7, further comprising:
transmitting, to a core network node, a request for subscription to the at least one event for the one or more VAL users or VAL UEs, the request containing the one or more validity conditions,
receiving, from the core network node, a notification of the at least one event,
and
notifying the VAL server about the at least one event; or
the method (400) further comprising:
transmitting, to a core network node, a request for subscription to the at least one event,
receiving, from the core network node, a notification of the at least one event,
and
notifying the VAL server about the at least one event only when the at least one event is valid in accordance with the one or more validity conditions.

13. The method (400) of any of claims 8, 11, and 12, wherein notifying the VAL server comprises: notifying aggregated events to the VAL server if there are multiple events to be notified.

14. A network node (900), comprising a communication interface (910), a processor (920), and a memory (930), the memory (930) comprising instructions executable by the processor (920) whereby the network node (900) is operative to, when implementing a Vertical Application Layer, VAL, server, perform the method according to any of claims 1-3, or when implementing a Network Resource Management, NRM, server, perform the method according to any of claims 4-13.

## Patentansprüche

1. Verfahren (300) in einem Vertical-Application-Layer-Server, VAL-Server, umfassend:
Übertragen (310), an einen Netzwerkressourcenverwaltungs-Server, NRM-Server, einer Überwachungsereignisabonnementanforderung, die Folgendes enthält:
eine Liste von Identitäten, IDs, eines oder mehrerer VAL-Benutzer oder VAL-Benutzergeräte, VAL-UEs, für die eine Ereignisüberwachung angefordert wird, oder eine VAL-Gruppen-ID einer Gruppe eines oder mehrerer VAL-Benutzer oder VAL-UEs, für die eine Ereignisüberwachung angefordert wird,
eine Überwachungsprofil-ID, die einer Liste eines oder mehrerer zu überwachender Ereignisse entspricht oder Ereignisdetails, die eine Liste eines oder mehrerer zu überwachender Ereignisse angeben,
eine VAL-Dienst-ID, die einen VAL-Dienst identifiziert, der mit mindestens einem des einen oder der mehreren zu überwachenden Ereignisse verknüpft ist, und
eine oder mehrere Gültigkeitsbedingungen für mindestens eines des einen oder der mehreren zu überwachenden Ereignisse, wobei die eine oder die mehreren Gültigkeitsbedingungen eine oder mehrere zeitliche und/oder räumliche Bedingungen für die Gültigkeit des mindestens einen Ereignisses umfassen; und
Empfangen (320), von dem NRM-Server, einer Überwachungsereignisabonnementantwort als eine Antwort auf die Überwachungsereignisabonnementanforderung,
wobei, wenn die Überwachungsereignisabonnementanforderung die Ereignisdetails enthält, die Überwachungsereignisabonnementantwort eine Überwachungsprofil-ID, die der Liste des einen oder der mehreren zu überwachenden Ereignisse entspricht, enthält.

2. Verfahren (300) nach Anspruch 1, wobei jedes des einen oder der mehreren zu überwachenden Ereignisse ein Überwachungsereignis oder ein Analyseereignis umfasst.

3. Verfahren (300) nach einem der Ansprüche 1 oder 2, ferner umfassend:
Empfangen, von dem NRM-Server, einer Benachrichtigung über mindestens eines des einen oder der mehreren zu überwachenden Ereignisse.

4. Verfahren (400) in einem Netzwerkressourcenverwaltungs-Server, NRM-Server, umfassend:
Empfangen (410), von einem Vertical-Application-Layer-Server, VAL-Server, einer Überwachungsereignisabonnementanforderung, die Folgendes enthält:
eine Liste von Identitäten, IDs, eines oder mehrerer VAL-Benutzer oder VAL-Benutzergeräte, VAL-UEs, für die eine Ereignisüberwachung angefordert wird, oder eine VAL-Gruppen-ID einer Gruppe eines oder mehrerer VAL-Benutzer oder VAL-UEs, für die eine Ereignisüberwachung angefordert wird,
eine Überwachungsprofil-ID, die einer Liste eines oder mehrerer zu überwachender Ereignisse entspricht oder Ereignisdetails, die eine Liste eines oder mehrerer zu überwachender Ereignisse angeben,
eine VAL-Dienst-ID, die einen VAL-Dienst identifiziert, der mit mindestens einem des einen oder der mehreren zu überwachenden Ereignisse verknüpft ist, und
eine oder mehrere Gültigkeitsbedingungen für mindestens eines des einen oder der mehreren zu überwachenden Ereignisse, wobei die eine oder die mehreren Gültigkeitsbedingungen eine oder mehrere zeitliche und/oder räumliche Bedingungen für die Gültigkeit des mindestens einen Ereignisses umfassen; und
Übertragen (420), an den VAL-Server, einer Überwachungsereignisabonnementantwort als Antwort auf die Überwachungsereignisabonnementanforderung,
wobei, wenn die Überwachungsereignisabonnementanforderung die Ereignisdetails enthält, das Verfahren (400) ferner Bestimmen einer Überwachungsprofil-ID umfasst, die der Liste des einen oder der mehreren zu überwachenden Ereignisse entspricht, basierend auf einer Entsprechung zwischen Überwachungsprofil-IDs und Ereignisdetails, und die Überwachungsereignisabonnementantwort die Überwachungsprofil-ID enthält.

5. Verfahren (400) nach Anspruch 4, ferner umfassend, wenn die Überwachungsereignisabonnementanforderung die Ereignisdetails enthält:
Bestimmen einer Überwachungsprofil-ID, die der Liste des einen oder der mehreren zu überwachenden Ereignisse entspricht, basierend auf einer Entsprechung oder Zuordnung zwischen Überwachungsprofil-IDs und Ereignisdetails,
wobei die Überwachungsereignisabonnementantwort die bestimmte Überwachungsprofil-ID enthält; oder
Verfahren, ferner umfassend, wenn die Überwachungsereignisabonnementanforderung die Überwachungsprofil-ID enthält:
Bestimmen von Ereignisdetails, welche die Liste des einen oder der mehreren zu überwachenden Ereignisse angeben, basierend auf einer Entsprechung oder Zuordnung zwischen Überwachungsprofil-IDs und Ereignisdetails.

6. Verfahren (400) nach Anspruch 5, wobei die Entsprechung oder Zuordnung durch eine Betriebs- und Wartungsentität, O&M-Entität, vorkonfiguriert ist oder basierend auf einer oder mehreren vorherigen Überwachungsereignisabonnementanforderungen mit Ereignisdetails erstellt wird.

7. Verfahren (400) nach einem der Ansprüche 4-6, wobei jedes des einen oder der mehreren zu überwachenden Ereignisse ein Überwachungsereignis oder ein Analyseereignis umfasst.

8. Verfahren (400) nach einem der Ansprüche 4-7, ferner umfassend:
Übertragen, an einen Kernnetzwerkknoten, einer Anforderung für ein Abonnement für mindestens eines des einen oder der mehreren zu überwachenden Ereignisse für den einen/das eine oder die mehreren VAL-Benutzer oder VAL-UEs;
Empfangen, von dem Kernnetzwerkknoten, einer Benachrichtigung über das mindestens eine Ereignis; und
Benachrichtigen des VAL-Servers über das mindestens eine Ereignis.

9. Verfahren (400) nach einem der Ansprüche 4-7, ferner umfassend:
Bestimmen von ereignisspezifischen Informationen für den VAL-Dienst basierend auf der VAL-Dienst-ID.

10. Verfahren (400) nach Anspruch 9, wobei die ereignisspezifischen Informationen basierend auf einer Entsprechung oder Zuordnung zwischen VAL-Dienst-IDs und ereignisspezifischen Informationen bestimmt werden, wobei die Entsprechung oder Zuordnung durch eine O&M-Entität vorkonfiguriert ist;
und/ oder, wobei die ereignisspezifischen Informationen eine Dienstgüteanforderung, QoS-Anforderung, für das mindestens eine Ereignis umfassen.

11. Verfahren (400) nach einem der Ansprüche 9-10, ferner umfassend:
Übertragen, an einen Kernnetzwerkknoten, einer Anforderung für ein Abonnement für das mindestens eine Ereignis für den einen/das eine oder die mehreren VAL-Benutzer oder VAL-UEs, wobei die Anforderungen die ereignisspezifischen Informationen enthält;
Empfangen, von dem Kernnetzwerkknoten, einer Benachrichtigung über das mindestens eine Ereignis; und
Benachrichtigen des VAL-Servers über das mindestens eine Ereignis.

12. Verfahren (400) nach einem der Ansprüche 4-7, ferner umfassend:
Übertragen, an einen Kernnetzwerkknoten, einer Anforderung für ein Abonnement für das mindestens eine Ereignis für den einen/das eine oder die mehreren VAL-Benutzer oder VAL-UEs, wobei die Anforderung die eine oder die mehreren Gültigkeitsbedingungen enthält,
Empfangen, von dem Kernnetzwerkknoten, einer Benachrichtigung über das mindestens eine Ereignis und
Benachrichtigen des VAL-Servers über das mindestens eine Ereignis; oder
wobei das Verfahren (400) ferner Folgendes umfasst:
Übertragen, an einen Kernnetzwerkknoten, einer Anforderung für ein Abonnement für das mindestens eine Ereignis,
Empfangen, von dem Kernnetzwerkknoten, einer Benachrichtigung über das mindestens eine Ereignis und
Benachrichtigen des VAL-Servers über das mindestens eine Ereignis nur, wenn das mindestens eine Ereignis gemäß der einen oder den mehreren Gültigkeitsbedingungen gültig ist.

13. Verfahren (400) nach einem der Ansprüche 8, 11 und 12, wobei das Benachrichtigen des VAL-Servers Folgendes umfasst: Benachrichtigen über aggregierte Ereignisse an den VAL-Server, wenn über mehrere Ereignisse zu benachrichtigen ist.

14. Netzwerkknoten (900), umfassend eine Kommunikationsschnittstelle (910), einen Prozessor (920) und einen Speicher (930), wobei der Speicher (930) Anweisungen umfasst, die durch den Prozessor (920) ausführbar sind, wodurch der Netzwerkknoten (900) dazu betriebsbereit ist, wenn ein Vertical-Application-Layer-Server, VAL-Server, umgesetzt wird, das Verfahren nach einem der Ansprüche 1-3 durchzuführen; oder, wenn ein Netzwerkressourcenverwaltungs-Server, NRM-Server, umgesetzt wird, das Verfahren nach einem der Ansprüche 4-13 durchzuführen.

## Revendications

1. Procédé (300) dans un serveur de couche d'application verticale, VAL, comprenant les étapes consistant à :
transmettre (310), à un serveur de gestion de ressources de réseau, NRM, une demande de souscription d'événement de surveillance contenant :
une liste d'identités, ID, d'au moins un utilisateur VAL ou d'au moins un équipement utilisateur, UE, VAL pour lequel une surveillance d'événement est demandée, ou un ID de groupe VAL d'un groupe d'au moins un utilisateur VAL ou d'au moins un UE VAL pour lequel une surveillance d'événement est demandée,
un ID de profil de surveillance correspondant à une liste d'au moins un événement à surveiller, ou des détails d'événement indiquant une liste d'au moins un événement à surveiller,
un ID de service VAL identifiant un service VAL associé à au moins un événement parmi ledit au moins un événement à surveiller, et
au moins une condition de validité pour au moins un événement parmi ledit au moins un événement à surveiller, dans lequel ladite au moins une condition de validité comprend au moins une condition temporelle et/ou spatiale pour que ledit au moins un événement soit valide ; et
recevoir (320), en provenance du serveur NRM, une réponse de souscription d'événement de surveillance en réponse à la demande de souscription d'événement de surveillance,
dans lequel, lorsque la demande de souscription d'événement de surveillance contient les détails d'événement, la réponse de souscription d'événement de surveillance contient un ID de profil de surveillance correspondant à la liste dudit au moins un événement à surveiller.

2. Procédé (300) selon la revendication 1, dans lequel chaque événement parmi ledit au moins un événement à surveiller comprend un événement de surveillance ou un événement d'analyse.

3. Procédé (300) selon la revendication 1 ou 2, comprenant en outre l'étape consistant à :
recevoir, en provenance du serveur NRM, une notification d'au moins un événement parmi ledit au moins un événement à surveiller.

4. Procédé (400) dans un serveur de gestion de ressources de réseau, NRM, comprenant les étapes consistant à :
recevoir (410), en provenance d'un serveur de couche d'application verticale, VAL, une demande de souscription d'événement de surveillance contenant :
une liste d'identités, ID, d'au moins un utilisateur VAL ou d'au moins un équipement utilisateur, UE, VAL pour lequel une surveillance d'événement est demandée, ou un ID de groupe VAL d'un groupe d'au moins un utilisateur VAL ou d'au moins un UE VAL pour lequel une surveillance d'événement est demandée,
un ID de profil de surveillance correspondant à une liste d'au moins un événement à surveiller, ou des détails d'événement indiquant une liste d'au moins un événement à surveiller,
un ID de service VAL identifiant un service VAL associé à au moins un événement parmi ledit au moins un événement à surveiller, et
au moins une condition de validité pour au moins un événement parmi ledit au moins un événement à surveiller, dans lequel ladite au moins une condition de validité comprend au moins une condition temporelle et/ou spatiale pour que ledit au moins un événement soit valide ; et
transmettre (420), au serveur VAL, une réponse de souscription d'événement de surveillance en réponse à la demande de souscription d'événement de surveillance,
dans lequel, lorsque la demande de souscription d'événement de surveillance contient les détails d'événement, le procédé (400) comprend en outre l'étape consistant à déterminer un ID de profil de surveillance correspondant à la liste dudit au moins un événement à surveiller sur la base d'une correspondance entre des ID de profil de surveillance et des détails d'événement, et la réponse de souscription d'événement de surveillance contient l'ID de profil de surveillance.

5. Procédé (400) selon la revendication 4, comprenant en outre, lorsque la demande de souscription d'événement de surveillance contient les détails d'événement, l'étape consistant à :
déterminer un ID de profil de surveillance correspondant à la liste dudit au moins un événement à surveiller sur la base d'une correspondance ou d'un mappage entre des ID de profil de surveillance et des détails d'événement,
dans lequel la réponse de souscription d'événement de surveillance contient l'ID de profil de surveillance déterminé ; ou
le procédé comprenant en outre, lorsque la demande de souscription d'événement de surveillance contient l'ID de profil de surveillance, l'étape consistant à :
déterminer des détails d'événement indiquant la liste dudit au moins un événement à surveiller sur la base d'une correspondance ou d'un mappage entre des ID de profil de surveillance et des détails d'événement.

6. Procédé (400) selon la revendication 5, dans lequel la correspondance ou le mappage est préconfiguré par une entité d'exploitation et de maintenance, O&M, ou est créé sur la base d'au moins une demande de souscription d'événement de surveillance précédente avec des détails d'événement.

7. Procédé (400) selon l'une quelconque des revendications 4 à 6, dans lequel chaque événement parmi ledit au moins un événement à surveiller comprend un événement de surveillance ou un événement d'analyse.

8. Procédé (400) selon l'une quelconque des revendications 4 à 7, comprenant en outre les étapes consistant à :
transmettre, à un nœud de réseau cœur, une demande de souscription à au moins un événement parmi ledit au moins un événement à surveiller pour ledit au moins un utilisateur VAL ou ledit au moins un UE VAL ;
recevoir, en provenance du nœud de réseau cœur, une notification dudit au moins un événement ; et
notifier ledit au moins un événement au serveur VAL.

9. Procédé (400) selon l'une quelconque des revendications 4 à 7, comprenant en outre l'étape consistant à :
déterminer des informations spécifiques à un événement pour le service VAL sur la base de l'ID de service VAL.

10. Procédé (400) selon la revendication 9, dans lequel les informations spécifiques à un événement sont déterminées sur la base d'une correspondance ou d'un mappage entre des ID de service VAL et des informations spécifiques à un événement, la correspondance ou le mappage étant préconfiguré par une entité O&M ;
et/ou, dans lequel les informations spécifiques à un événement comprennent une exigence de qualité de service, QoS, pour ledit au moins un événement.

11. Procédé (400) selon l'une quelconque des revendications 9 et 10, comprenant en outre les étapes consistant à :
transmettre, à un nœud de réseau cœur, une demande de souscription audit au moins un événement pour ledit au moins un utilisateur VAL ou ledit au moins un UE VAL, la demande contenant les informations spécifiques à un événement ;
recevoir, en provenance du nœud de réseau cœur, une notification dudit au moins un événement ; et
notifier ledit au moins un événement au serveur VAL.

12. Procédé (400) selon l'une quelconque des revendications 4 à 7, comprenant en outre les étapes consistant à :
transmettre, à un nœud de réseau cœur, une demande de souscription audit au moins un événement pour ledit au moins un utilisateur VAL ou ledit au moins un UE VAL, la demande contenant ladite au moins une condition de validité,
recevoir, en provenance du nœud de réseau cœur, une notification dudit au moins un événement, et
notifier ledit au moins un événement au serveur VAL ; ou
le procédé (400) comprenant en outre les étapes consistant à :
transmettre, à un nœud de réseau cœur, une demande de souscription audit au moins un événement,
recevoir, en provenance du nœud de réseau cœur, une notification dudit au moins un événement, et
notifier ledit au moins un événement au serveur VAL uniquement lorsque ledit au moins un événement est valide conformément à ladite au moins une condition de validité.

13. Procédé (400) selon l'une quelconque des revendications 8, 11 et 12, dans lequel la notification au serveur VAL comprend l'étape consistant à : notifier des événements agrégés au serveur VAL en présence de multiples événements à notifier.

14. Nœud de réseau (900), comprenant une interface de communication (910), un processeur (920) et une mémoire (930), la mémoire (930) comprenant des instructions exécutables par le processeur (920) moyennant quoi le nœud de réseau (900) est apte à, lors de la mise en œuvre d'un serveur de couche d'application verticale, VAL, exécuter le procédé selon l'une quelconque des revendications 1 à 3, ou, lors de la mise en œuvre d'un serveur de gestion de ressources de réseau, NRM, exécuter le procédé selon l'une quelconque des revendications 4 à 13.
